# EUROPÄISCHE PATENTSCHRIFT

(11) **EP 1 363 841 B1**
(45) Veröffentlichungstag und Bekanntmachung des Hinweises auf die Patenterteilung: **06.04.2011**
(21) Anmeldenummer: 02704688.7
(22) Anmeldetag: 06.02.2002
(51) Int. Cl.: B65D 63/14, F16L 3/233

(54) **ANORDNUNG UND VERFAHREN ZUM BINDEN VON GEGENSTÄNDEN**
BUNDLING STRAP AND METHOD FOR BUNDLING OBJECTS
LIEN ET PROCEDE POUR LIER DES OBJETS

(30) Priorität: 12.02.2001 EP 01103246
(43) Veröffentlichungstag der Anmeldung: 26.11.2003
(73) Patentinhaber: Hellermann Tyton GmbH, 25436 Tornesch (DE)
(72) Erfinder: KURMIS, Viktor, 25421 Pinneberg (DE)
(74) Vertreter: Glawe, Delfs, Moll
(86) Internationale Anmeldenummer: PCT/EP2002/001239
(87) Internationale Veröffentlichungsnummer: WO 2002/064442

(56) Entgegenhaltungen:
- FR-A- 2 054 432
- FR-A- 2 771 783
- GB-A- 2 065 218
- US-A- 4 680 834

## Beschreibung

Es sind Bänder zum Binden von Kabelbäumen und anderen Gegenständen bekannt, die als Abschnitte eines langen Bandvorrats verarbeitet werden. Beide Enden einer um den zu bindenden Gegenstand geschlungenen und gespannten Bandschlaufe werden mittels eines Schlosses gesichert. Innerhalb des Schlosses sind zwei gezahnte Sperreinrichtungen vorgesehen, die mit einer Zahnung je eines Endes der Bandschlaufe sperrend zusammenwirken (US-A-4 680 834, GB-A 2065218, EP-A-488 051, EP-B-297 337).

Zu Beginn des Bindevorgangs mittels eines Werkzeugs wird ein Abschnitt des Bands durch ein Schloß vorgeschoben, wobei seine Zähne von den entgegen gerichteten Zähnen der Sperreinrichtungen ferngehalten werden. In Form einer Schlaufe, deren Länge größer ist als der Umfang des zu bindenden Gegenstands, wird das Band um den Gegenstand herumgeführt. Sein vorlaufendes, freies Ende wird dann in das Schloß zurückgeführt und dort mittels einer der Sperreinrichtungen gesichert, während das andere, mit dem Bandvorrat verbundene Bandende zum Zwecke des Spannens zurückgezogen wird. Dabei gleiten seine Zähne an den Zähnen der anderen Sperreinrichtung entlang, wobei diese sich gegenseitig beschädigen können. Je geringer der Umfang der zu bindenden Gegenstände im Vergleich mit der Länge der zunächst gebildeten Schlaufe ist, um so größer ist die Strekke, um die das Bandende beim Spannen zurückgezogen ist. Wenn Gegenstände zu binden sind, deren Umfang sehr klein ist, kann es geschehen, daß einige bei mehreren aufeinanderfolgenden Spannvorgängen an den Zähnen der Schlösser vorbeilaufen und dadurch mehrfach beansprucht und ggf. beschädigt werden, bevor sie schließlich selbst in einem späteren Bindevorgang zur Sperrfunktion herangezogen werden. Die Beschädigungen können sich dann sperrkraftmindernd auswirken. Auch die Schloßzähne können dabei beschädigt werden. Die Wahrscheinlichkeit einer Beschädigung ist um so größer, je scharfkantiger die Zähne in den Schlössern sind. Diese Scharfkantigkeit hält man bisher für erforderlich. damit die Schloßzähne zuverlässig in die Zähne des Bandes eingreifen. Dies gilt auch dann, wenn die Spitzen der Bandzähne abgerundet sind (US-A-4 680 834, GB-A-2065218). Deshalb werden sie während dieses Vorgangs voneinander fern gehalten. Dies muß mit einem gewissen Sicherheitsabstand geschehen. Ein Ziel der Erfindung besteht daher darin, den erforderlichen Sicherheitsabstand zu verringern.

Außer der Zuverlässigkeit des Sperreingriffs gibt es einen weiteren Grund dafür, warum die Zahnköpfe bekannter Sperreinrichtungen scharfkantig ausgebildet werden. Dieser besteht darin, daß man bemüht ist, den Eingriff der Zähne der Sperreinrichtung in die Zähne des Bandes so nahe wie möglich beim Zahnfuß, das heißt, bei der Verbindung des Zahns mit dem durchgehenden Strangquerschnitt des Bandes stattfinden zu lassen, weil andernfalls die Gefahr besteht, daß der Zahn des Bandes sich biegt und der Zahn des Schlosses von ihm abgleitet. Die Erfindung hat das weitere Ziel, die dadurch hervorgerufene Sperrkraftverminderung zu vermeiden.

Erfindungsgemäß werden diese Ziele durch die Merkmale des Anspruchs 1 erreicht.

Demnach sind die Zahnköpfe der Sperreinrichtung und die Zahnfüße des Bandes zumindest auf ihren im gespannten Zustand aneinander liegenden Seiten abgerundet oder abgeschrägt. Dadurch wird erreicht, daß die Zahnköpfe sowohl des Bandes als auch des Schlosses weniger leicht beschädigt werden. Ferner wird dadurch erreicht, daß der Sicherheitsabstand verringert werden kann, der beim Vorschub des Bandes zwischen den Bandzähnen und den Sperrzähnen eingehalten werden muß. Denn eine Berührung muß nicht unbedingt vermieden werden, wenn die Zähne dank der Rundung leichter aneinander vorbeigleiten. Dies gilt insbesondere dann, wenn nach einem weiteren Merkmal der Erfindung auch die bandseitigen Zahnköpfe abgerundet oder abgeschrägt sind. In diesem Fall sind auch die Zahnfüße an der Sperreinrichtung abgerundet bzw. abgeschrägt. Die Abrundung bzw. Abschrägung bezieht sich zweckmäßigerweise auf beide Seiten der Zahnköpfe und Zahnfüße des Bandes, insbesondere symmetrisch.

Die Abrundung der Zahnköpfe auf Seiten der Sperreinrichtung hat die Konsequenz, daß die Kraftübertragung zwischen der Sperreinrichtung des Schlosses und den Bandzähnen nicht unmittelbar am Übergang von den Bandzähnen zum durchgehenden Strangquerschnitt, sondern in einem gewissen Abstand davon stattfindet. Entgegen bisheriger Meinung stellt dies jedoch keinen Nachteil dar. Im Gegenteil wird durch die Abrundung des Zahnfußes eine Überbeanspruchung der Bandzähne durch Kerbwirkung an dieser Stelle vermieden. Das gilt insbesondere dann, wenn das Zahnprofil des Bandes durch Prägen eines Strangs heißplastischen Kunststoffs hergestellt ist. Dann findet nämlich im Bereich der Oberfläche des Zahnfußes ein besonders starkes Fließen des Bandwerkstoffs statt, wodurch die langgestreckten Moleküle oder die im Werkstoff gegebenenfalls enthaltenen Verstärkungsfasern parallel zur Oberfläche des Zahnfußes strukturiert werden. Dadurch wird eine bedeutende Verfestigung gegenüber den an dieser Stelle auftretenden Kräften erreicht.

Weiterhin hat sich herausgestellt, daß die Beanspruchung der Zähne beim Durchrutschen durch das Schloß weniger leicht zu Schäden führt und daß auch die Gefahr einer Verformung der Zähne unter der Sperrkraft weniger leicht eintritt, wenn der Flankenwinkel der Zähne (d.h. der Winkel zwischen einer Flanke und einem auf die Bandrichtung gefällten Lot) verhältnismäßig groß gewählt wird, nämlich über 25 Grad. Ferner kann es zweckmäßig sein, die Abrundung oder Abschrägung auf nicht mehr als etwa ein Viertel der Gesamthöhe der Bandzähne zu beschränken, wobei sie sich zweckmäßigerweise über nicht mehr als 0,1 mm (gemessen in Richtung der Bandhöhe) erstreckt. Sie soll aber normalerweise auch nicht weniger als ein Achtel der Zahnhöhe einnehmen.

Die beschriebene Anordnung bewährt sich vor allem in solchen Bindeverfahren, bei denen das Band zunächst in einer Vorschubrichtung entgegen den Sperreinrichtungen durch das Schloß geführt, das freie Ende der dabei gebildeten Schlaufe um den Gegenstand geschlungen, in das Schloß zurückgeführt und das andere Ende der Schlaufe, das mit dem Bandvorrat verbunden ist, entgegen der Vorschubrichtung zurückgeführt wird. Bei einer solchen Anordnung muß sich das mit dem Bandvorrat verbundene Ende nicht nur dann entgegen der ihm zugeordneten Sperreinrichtungen bewegen, wenn das freie Bandende sich auβerhalb des Schlosses befindet und sich um den zu bindenden Gegenstand bewegt, sondern auch dann, wenn das freie Bandende in das Schloß zurückgeführt wird und deshalb der Raum im Schloß zwischen den einander gegenüberstehenden Sperreinrichtungen knapp ist. Zwar wird die dem Bandvorschub entgegengerichtete Sperreinrichtung in dieser Phase immer noch zwangsweise von den Bandzähnen entfernt gehalten. Wenn aber durch die erfindungsgemäße Abrundung bzw. Abschrägung der Zahnköpfe dafür gesorgt wird, daß bei zufällig geringem Kontakt der Zähne mit den Sperreinrichtungen die Bewegung nicht gestoppt wird, braucht kein großer Sicherheitsabstand zwischen den Bandzähnen und den Sperreinrichtungen eingehalten zu werden. Das Schloß kann entsprechend knapper bemessen werden. Dies steigert die Verläßlichkeit und verringert die notwendigen Schloßabmessungen und damit auch den Materialbedarf.

Die Erfindung wird im folgenden näher unter Bezugnahme auf die Zeichnung erläutert, die vorteilhafte Ausführungsbeispiele veranschaulicht. Es zeigen:
- Fig. 1: eine stark vergrößerte Querschnittsdarstellung der aus Band und Schloß bestehenden Bindean- ordnung,
- Fig. 2 bis 4: die Bindeanordnung in unterschiedlichen Funktionsstadien in weniger starker Vergröße- rung und
- Fig. 5 und 6: Einzelheiten einer abgerundeten und einer abgeschrägten Zahnform.

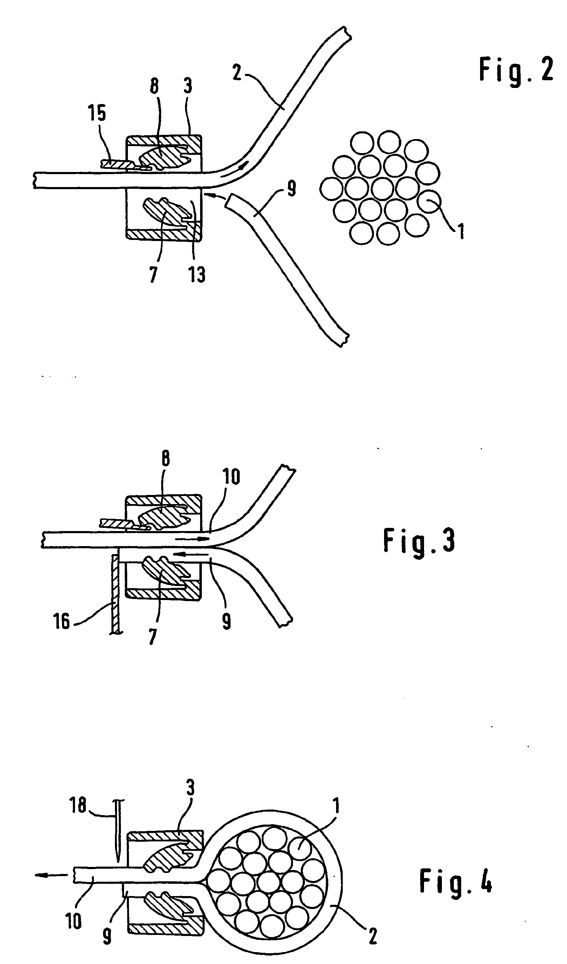

Ein Gegenstand, beispielsweise ein Kabelbündel 1, soll mittels des Bandes 2 und des Schlosses 3 so gebunden werden, wie es in Fig. 4 (kurz vor Beendigung des Bindevorgangs) gezeigt ist. Dafür wird ein Werkzeug von dem Typ verwendet, das in der EP-A-297 337 gezeigt ist. Das Band 2 weist auf einer Seite Zähne 6 auf. Das Schloß 3 enthält Sperreinrichtungen, die von einer ersten Sperrklinke 7, die mit dem freien Ende 9 des Bands 2 zusammenwirkt, und einer zweiten Sperrklinke 8 gebildet sind, die mit dem Ende 10 des Bands 2 zusammenwirkt, auf das die Vorschuborgane innerhalb eines Bindewerkzeugs einwirken und das mit einem nicht gezeigten Bandvorrat verbunden ist. Die Sperrklinken 7,8 weisen zu diesem Zweck Zähne 11 auf, deren Gestalt auf diejenige der Bandzähne 6 abgestimmt ist. Sie ragen derart schräg von einem Gelenkpunkt 12 in die im Schloß befindliche Öffnung 13 vor, daß sie das jeweils mit ihnen zusammenwirkende Bandende 9, 10 an einer Bewegung in Richtung des Pfeils 14 hindern. Zwar werden die Zähne der Sperrklinken im Plural genannt, weil meist mindestens zwei Zähne an jeder Sperrklinke angeordnet sind. Jedoch soll sich der Schutz auch auf den Fall beziehen, daß nur ein Zahn an einer Sperrklinke vorgesehen ist.

Der Bindevorgang vollzieht sich folgendermaßen. Zunächst wird gemäß Fig. 2 das Band 2 in der Richtung 14 durch das im Werkzeug gehaltene Schloß 3 hindurchgeschoben und mittels nicht dargestellter Führungseinrichtungen um den zu bindenden Gegenstand 1 geschlungen, so daß das vorlaufende, freie Bandende 9 wieder vor dem Schloß 3 erscheint. Damit die Zähne des durch das Schloß geführten Bandendes 10 nicht von den Zähnen der zugehörigen Sperrklinke 8 festgehalten werden, wird diese mittels einer im Werkzeug vorgesehenen Zunge 15 daran gehindert, in den Bewegungsbereich des Bandendes 10 vorzuragen. Die Zunge 15 bildet auch eine Führungsfläche für die gezahnte Oberfläche des Bandes 10. Zu diesem Zweck ist sie dem Bandende 10 mindestens ebenso nahe wie die Zähne der Sperrklinke 8. Der Strang 10 des Bands wird dadurch sicher an den Zähnen der Sperrklinke 8 vorbeigeleitet. Mit den Zähnen der Klinke 7 kann er nicht kollidieren, weil er auf deren Seite ungezahnt ist. Falls er ausnahmsweise auf dieser Seite doch gezahnt sein sollte, kann bei der Sperrklinke 7 ebenso eine diese zurückhaltende Zunge 15 vorgesehen sein, wie bei der Sperrklinke 8.

Während der Führung der von dem Band 2 gebildeten Schlaufe um den zu bindenden Gegenstand 1 ist die Länge der Bandschlaufe größer, in vielen Fällen sogar mehrfach größer, als der Umfang des zu bindenden Gegenstands 1. Wenn am Ende des Umschlingungsvorgangs das vorlaufende Band-ende 9 das Schloß 3 wieder erreicht (Fig. 2), tritt es gemäß Fig. 3 auf der Seite der Sperrklinke 7 in die Öffnung des Schlosses 3 ein, bis es auf einen Widerstand oder Sensor 16 trifft, der den weiteren Bandvorschub beendet.

Wenn die Führungseinrichtung, die das Band um den zu bindenden Gegenstand herumführt während dieses Vorgangs konstante Länge hat, wie es im allgemeinen der Fall ist, geschieht das Einschieben des Bandendes 9 in das Schloß 3 aufgrund der Vorschubbewegung, die dem Bandteil 10 des Bandes im Werkzeug erteilt wird. Das bedeutet, daß dieser Bandteil 10 sich in der Richtung 14 entgegen der Sperrklinke 8 und entgegen der Bewegungsrichtung des freien Bandendes 9 durch das Schloß 3 bewegen muß. Dies ist deshalb möglich, weil auch noch dann, wenn das freie Bandende 9 in das Schloß eingetreten ist, die mit dem Bandteil 10 zusammenwirkende Sperrklinke 8 durch die Zunge 15 am Eingriff in die Zahnung des Bandteils 10 gehindert wird.

Falls bei einer anderen Ausführungsform der Erfindung die Bewegung des freien Bandendes 9 in das Schloß 3 hinein nicht durch Vorschub des Bandteils 10 veranlaßt wird, sondern beispielsweise durch eine Verkürzung des Umfangs der Umschlingungsführung, kann der Bandteil 10 währenddessen stillstehen; die Sperrklinke 8 darf dann in die Zahnung des Bandteils 10 eingreifen.

Sobald das freie Bandende 9 in das Schloß 3 eingedrungen und durch die Sperrklinke 7 gesichert ist, wird das andere Ende 10 der Bandschlaufe gemäß Fig. 4 in Pfeilrichtung 17 zurückgezogen. Dadurch wird die Schlaufe um den zu bindenden Gegenstand 1 gespannt. Sobald die gewünschte Bandspannung erreicht ist, wird das bis dahin mit dem Bandvorrat verbundene Bandende 10 durch eine Klinge 18 abgeschnitten.

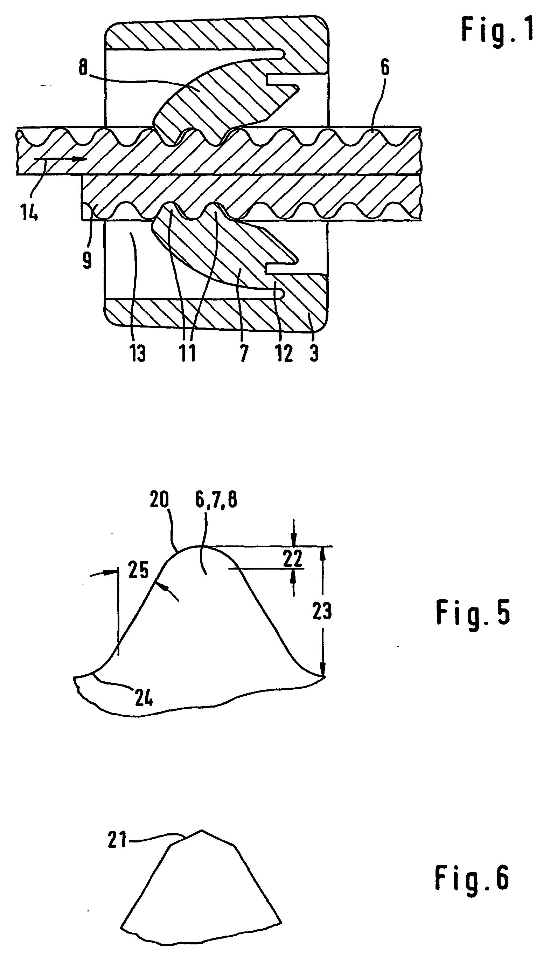

Beim Spannen des Bandes wird ein großer Teil der weiträumig um den Gegenstand 1 geschlungenen Schlaufe des Bandes 2 durch das Schloß 3 zurückgezogen. Wenn der Umfang des Gegenstands 1 mehrfach kleiner ist als der Umfang der anfänglich gebildeten Schlaufe, kommt es vor, daß bestimmte Bandabschnitte bei aufeinanderfolgenden Bindevorgängen mehrfach nach vorne durch ein Schloß hindurchgeschoben und zum Spannen durch dasselbe Schloß wieder zurückgezogen werden, bevor sie selbst mit einer Sperrklinke 7, 8 verriegelnd zusammenwirken. Es ist daher wichtig, daß sie bis zum Erreichen ihres endgültigen Verriegelungszustands unbeschädigt bleiben. Auch sollen die Zahnköpfe der Sperrklinken unbeschädigt bleiben. Dies ist mit vorbekannten, spitz oder kantig ausgebildeten Zahnköpfen der Sperrklinken schwerer zu erreichen als mit den unempfindlicheren Zähnen, die gemäß Fig. 5 abgerundet oder gemäß Fig. 6 abgeschrägt sind. Die Abrundung 20 oder Abschrägung 21 erstreckt sich nur über den obersten Höhenanteil 22 des Zahnkopfs, der so gering sein soll, wie es im Hinblick auf ihre Funktion möglich ist. Sie ist in der Regel nicht größer als etwa ein Viertel der Zahnhöhe 23 und/oder als 0,1 mm. Die Abrundung soll andererseits auch nicht weniger als etwa ein Achtel der Zahnhöhe einnehmen.

Für die Zahnfüße 24 des Bandes gilt dies entsprechend. Auch an den Zahnfüßen der Sperrklinken 7, 8 können derartige Abrundungen bzw. Abschrägungen vorgesehen sein. Während man aber bei den Zahnfüßen des Bandes die Abrundung bzw. Abschrägung zweckmäßigerweise auf das Ausmaß beschränkt, das durch die Abrundung bzw. Abschrägung der Zahnköpfe der Sperrklinken vorgegeben ist, kann der Freiraum am Fuß der Sperrklinkenzähne großzügiger bemessen werden.

Im Hinblick auf die Widerstandsfähigkeit der Zähne wird der Flankenwinkel 25 verhältnismäßig groß gewählt, nämlich im vorliegenden Beispiel bei 30°. Es versteht sich, daß der Eingriffswinkel der Sperrklinken 7, 8 (der Winkel zwischen der Bandrichtung und der Linie, die das Gelenk der Sperrklinke mit der Eingriffsstelle am Band verbindet) stets größer als der Flankenwinkel sein muß.

## Patentansprüche

1. Bindeanordnung bestehend aus einem mindestens einseitig gezahnten Band (2) und einem zur Aufnahme zweier Enden (9, 10) einer Schlaufe des Bands (2) bestimmten Schloß (3), das mindestens eine Sperreinrichtung (7, 8) enthält, die eine Zahnung (11) passend zur Zahnung (6) des Bands aufweist, **dadurch gekennzeichnet, daß** die Zahnköpfe (20, 21) der Sperreinrichtung (7, 8) und die Zahnfüße (24) des Bandes (2) zumindest auf ihren im gespannten Zustand aneinander liegenden Seiten abgerundet oder abgeschrägt sind.

2. Bindeanordnung nach Anspruch 1, **dadurch gekennzeichnet, daß** auch die Zahnköpfe (20, 21) des Bandes (2) und ggf. die Zahnfüße der Sperreinrichtung (7, 8) abgerundet bzw. abgeschrägt sind.

3. Bindeanordnung nach Anspruch 1 oder 2, **dadurch gekennzeichnet, daß** die Zahnköpfe (20, 21) und die Zahnfüße (24) des Bandes (2) auf beiden Seiten abgerundet sind.

4. Bindeanordnung nach einem der Ansprüche 1 bis 3, **dadurch gekennzeichnet, daß** die Zähne (6) des Bandes (2) im Querschnitt symmetrisch ausgebildet sind.

5. Bindeanordnung nach einem der Ansprüche 1 bis 4, **dadurch gekennzeichnet, daß** der Anteil (22) der Abrundung (20) bzw. Abschrägung (21) an der Höhe (23) des Zahns (6, 7, 8) nicht größer als ein Viertel ist.

6. Bindeanordnung nach Anspruch 5, **dadurch gekennzeichnet, daß** die Höhe (22) der Abrundung (20) bzw. Abschrägung (21) des Zahns (6, 7, 8) nicht größer als 0,1 mm ist.

7. Bindeanordnung nach Anspruch 5 oder 6, **dadurch gekennzeichnet, daß** der Anteil (22) der Abrundung (20) bzw. Abschrägung (21) an der Höhe (23) des Zahns (6, 7, 8) nicht kleiner als ein Achtel ist.

8. Bindeanordnung nach einem der Ansprüche 1 bis 7, **dadurch gekennzeichnet, daß** der Flankenwinkel der Zähne mindestens 25° beträgt.

9. Bindeanordnung nach einem der Ansprüche 1 bis 8, **dadurch gekennzeichnet, daß** das Zahnprofil des Bandes durch Prägen eines Strangs heißplastischen Kunststoffs hergestellt ist.

10. Verfahren zum Binden eines Gegenstands (1) mittels einer Schlaufe eines gezahnten Bandes (2) und eines Schlosses (3), das die Enden (9, 10) der Schlaufe aufnimmt und zwei mit der Bandzahnung (6) zusammenwirkende Sperrklinken (7, 8) enthält, bei dem das Band (2) in Vorschubrichtung entgegen den Sperrklinken (7, 8) durch das Schloß (3) geführt, um den Gegenstand (1) geschlungen, das freie Ende (9) der dabei gebildeten Schlaufe in das Schloß (3) zurückgeführt und das andere Ende der Schlaufe zum Spannen des Bandes entgegen der Vorschubrichtung zurückgezogen wird, **dadurch gekennzeichnet, daß** eine Bandanordnung gemäß einem der Ansprüche 1 bis 9 verwendet wird.

## Claims

1. Tying arrangement comprising a strip (2), which is serrated at least on one side, and a lock (3), which is intended for receiving two ends (9, 10) of a loop of the strip (2) and contains at least one blocking device (7, 8), which has a serration (11) matching the serration (6) of the strip, **characterized in that** the teeth tips (20, 21) of the blocking device (7, 8) and the teeth bases (24) of the strip (2) are rounded off or beveled at least on their sides lying against one another in the tightened state.

2. Tying arrangement according to Claim 1, **characterized in that** the teeth tips (20, 21) of the strip (2) and possibly the teeth bases of the blocking device (7, 8) are also rounded off or beveled.

3. Tying arrangement according to Claim 1 or 2, **characterized in that** the teeth tips (20, 21) and the teeth bases (24) of the strip (2) are rounded off on both sides.

4. Tying arrangement according to one of Claims 1 to 3, **characterized in that** the teeth (6) of the strip (2) are symmetrically formed in cross section.

5. Tying arrangement according to one of Claims 1 to 4, **characterized in that** the part (22) of the height (23) of the tooth (6, 7, 8) made up by the rounding-off (20) or beveling (21) is no greater than one quarter.

6. Tying arrangement according to Claim 5, **characterized in that** the height (22) of the rounding-off (20) or beveling (21) of the tooth (6, 7, 8) is no greater than 0.1 mm.

7. Tying arrangement according to Claim 5 or 6, **characterized in that** the part (22) of the height (23) of the tooth (6, 7, 8) made up by the rounding-off (20) or beveling (21) is no smaller than one eighth.

8. Tying arrangement according to one of Claims 1 to 7, **characterized in that** the flank angle of the teeth is at least 25°.

9. Tying arrangement according to one of Claims 1 to 8, **characterized in that** the tooth profile of the strip is produced by embossing a strand of hot-plastic polymer.

10. Method for tying an item (1) by means of a loop of a serrated strip (2) and a lock (3), which receives the ends (9, 10) of the loop and contains two blocking pawls (7, 8) acting together with the strip serration (6), in which method the strip (2) is passed through the lock (3) in a pushing-forward direction counter to the blocking pawls (7, 8) and wrapped around the item (1), the free end (9) of the loop formed thereby is led back into the lock (3) and the other end of the loop is pulled back counter to the pushing-forward direction for tightening the strip, **characterized in that** a strip arrangement according to one of Claims 1 is 9 is used.

## Revendications

1. Lien se composant d'une bande (2) dentée au moins d'un côté et d'une serrure (3) déterminée pour la réception de deux extrémités (9, 10) d'une boucle de la bande (2), qui contient au moins un dispositif de blocage (7, 8) qui présente une denture (11) adaptée à la denture (6) de la bande, **caractérisé en ce que** les têtes de dent (20, 21) du dispositif de blocage (7, 8) et les pieds de dent (24) de la bande (2) sont arrondis ou biseautés au moins sur leurs côtés reposant les uns sur les autres à l'état tendu.

2. Lien selon la revendication 1, **caractérisé en ce que** les têtes de dent (20, 21) de la bande (2) et éventuellement les pieds de dent du dispositif de blocage (7, 8) sont aussi arrondis ou biseautés.

3. Lien selon la revendication 1 ou 2, **caractérisé en ce que** les têtes de dent (20, 21) et les pieds de dent (24) de la bande (2) sont arrondis des deux côtés.

4. Lien selon l'une quelconque des revendications 1 à 3, **caractérisé en ce que** la section transversale des dents (6) de la bande (2) est réalisée de manière symétrique.

5. Lien selon l'une quelconque des revendications 1 à 4, **caractérisé en ce que** la part (22) de l'arrondi (20) ou du biseau (21) sur la hauteur (23) de la dent (6, 7, 8) n'excède pas un quart.

6. Lien selon la revendication 5, **caractérisé en ce que** la hauteur (22) de l'arrondi (20) ou du biseau (21) de la dent (6, 7, 8) n'excède pas 0,1 mm.

7. Lien selon la revendication 5 ou 6, **caractérisé en ce que** la part (22) de l'arrondi (20) ou du biseau (21) sur la hauteur (23) de la dent (6, 7, 8) n'est pas inférieure à un huitième.

8. Lien selon l'une quelconque des revendications 1 à 7, **caractérisé en ce que** l'angle de flanc des dents s'élève au moins à 25°.

9. Lien selon l'une quelconque des revendications 1 à 8, **caractérisé en ce que** le profilé denté de la bande est fabriqué par estampage d'une barre de thermoplastique.

10. Procédé pour lier un objet (1) à l'aide d'une boucle d'une bande dentée (2) et d'une serrure (3) qui reçoit les extrémités (9, 10) de la boucle et contient deux cliquets d'arrêt (7, 8) coopérant avec la denture de la bande (6), pour lequel la bande (2) traverse la serrure (3) dans le sens d'avancement contre les cliquets d'arrêt (7, 8) afin d'enlacer l'objet (1), l'extrémité libre (9) de la boucle formée est ramenée dans la serrure (3) et l'autre extrémité de la boucle est tirée en arrière pour tendre la bande dans le sens inverse d'avancement, **caractérisé en ce qu'**un lien selon l'une quelconque des revendications 1 à 9 est utilisé.
